# EUROPÄISCHE PATENTANMELDUNG

(11) **EP 1 927 388 A1**
(43) Veröffentlichungstag der Anmeldung: **04.06.2008**
(21) Anmeldenummer: 07020663.6
(22) Anmeldetag: 23.10.2007
(51) Int. Cl.: B01D 29/11, C02F 1/00, E03F 5/14

(54) **Regenwasser-Schachtfiltersystem**

(30) Priorität: 29.11.2006 DE 202006018117 U
(71) Anmelder: Heitker GmbH, 49809 Lingen (Ems) (DE)
(72) Erfinder: Heitker, Martin, 49809 Lingen (DE)
(74) Vertreter: Jabbusch, Matthias

(57) **Zusammenfassung**

Bei einer Vorrichtung zum Reinigen wenigstens eines flüssigen Mediums, insbesondere Abwasser, mit zumindest einem das Medium zwischenspeichernden Auffangbehälter (2), wobei der Auffangbehälter (2) zumindest ein vom Medium durchströmten Filterkörper (14) für die im Medium befindlichen Verunreinigungen aufweist, ist vorgesehen, daß der Filterkörper (14) wenigstens eine als Anströmfläche ausgebildete Außenwandung (15) und mindestens eine als Abströmfläche ausgebildete Innenwandung (16) aufweist, wobei die Innenwandung von der Außenwandung zumindest abschnittsweise ummantelt ist.

## Beschreibung

Die Erfindung bezieht sich auf eine Vorrichtung zum Reinigen wenigstens eines flüssigen Mediums, insbesondere Abwasser, mit zumindest einem das Medium zwischenspeichernden Auffangbehälter, wobei der Auffangbehälter zumindest einen vom Medium durchströmten Filterkörper für die im Medium befindlichen Verunreinigungen aufweist.

Es sind Vorrichtungen bekannt, wie zum Beispiel Regenwasserfiltersysteme, die zur Reinigung oder Aufbereitung von schadstoffbelastetem Regenwasser, welches zum Beispiel auf Metalldachflächen oder Verkehrsflächen niedergegangen ist, angewendet werden, bevor eine Einleitung des beispielsweise aufgefangenen Dachablaufwassers und den darin gelösten Schadstoffen in den Boden und damit in das Grundwasser erfolgt. Derartige Vorrichtungen können insbesondere einen vertikal ausgerichteten Auffangbehälter aufweisen, der zum Beispiel aus einem einteiligen Hohlgefäß bzw. aus aufeinander gesetzten Betonteilen ausgebildet sein kann. Der Auffangbehälter weist wenigstens einen Zulauf auf, über den zum Beispiel das flüssige Medium ins Innere des Auffangbehälters geleitet wird. Um mitgeführte Schwebeteilchen aus dem Regenwasser entfernen zu können, wird unmittelbar nach Einleitung in den Auffangbehälter die Sedimentation der Schwebeteilchen unter Einfluß der natürlichen Schwerkraft oder durch Zentrifugieren vorgenommen. Das größtenteils von Schwebeteilchen befreite Regenwasser wird dann einem Filterkörper zugeführt, wobei im Medium gelöste anorgane Stoffe im Filterkörper gebunden und gegebenenfalls die restlichen im Medium verbliebenen Schwebeteilchen über den Filterkörper herausgefiltert werden.

Vorrichtungen vorbezeichneter Gattung weisen zum Beispiel einen zylindrischen, sich über einen Abschnitt des Auffangbehälters erstreckenden und dessen freien Querschnitt vollständig ausfüllenden Filterkörper auf, der vom zu reinigenden Medium in vertikaler Richtung durchströmt wird. Neben der vertikalen Durchströmung des Filterkörpers ist es ebenfalls bekannt, das zu reinigende Medium im Inneren eines zylindrisch ausgebildeten Filterkörpers vertikal aufsteigen und dann horizontal von Innen nach Außen durch den Filterkörper durchströmen zu lassen, um so die im Abwasser gelösten Schadstoffe zu entfernen. Bei der Filterung der Schadstoffe aus dem Medium kommt es bei Vorrichtungen bekannter Gattung mitunter zu Schwierigkeiten, da die Anström- oder Filtereintrittsfläche des Filterkörpers im Verhältnis zum Filtervolumen relativ klein ausgestaltet ist und dementsprechend ein erhöhtes Risiko einer Verstopfung der Filtereintrittsfläche gegeben ist. Die höhere Verstopfungsanfälligkeit und die damit verbundene geringere Standzeit bekannter Filterkörper verursachen gleichzeitig einen erhöhten Wartungsaufwand, da fällige Wartungsarbeiten in kürzeren Abständen durchgeführt werden müssen.

Der Erfindung liegt die Aufgabe zugrunde, eine Vorrichtung zum Reinigen von flüssigen Medien dahingehend zu verbessern, daß neben einer verbesserten Reinigungswirkung eine verlängerte Standzeit des Filterkörpers gegeben ist.

Die Lösung der Aufgabe erfolgt erfindungsgemäß durch eine Vorrichtung mit den Merkmalen des Schutzanspruchs 1. Vorteilhafte Weiterbildungen und Ausgestaltungen der Erfindung sind in den Unteransprüchen angegeben.

Bei einer Vorrichtung zum Reinigen wenigstens eines flüssigen Mediums, insbesondere Abwasser, mit zumindest einem das Medium zwischenspeichernden Auffangbehälter, wobei der Auffangbehälter zumindest einen vom Medium durchströmten Filterkörper für die im Medium befindlichen Verunreinigungen aufweist, ist nach der Erfindung vorgesehen, daß der Filterkörper wenigstens eine als Anströmfläche ausgebildete Außenwandung und mindestens eine als Abströmfläche ausgebildete Innenwandung aufweist, wobei die Innenwandung von der Außenwandung zumindest abschnittsweise ummantelt ist.

Mittels derartig ausgestalteter Außen- und Innenwandungen des Filterkörpers, wobei die Außenwandung oder äußere Mantelfläche als Filtereintritt und die Innenwandung bzw. innere Mantelfläche als Filteraustritt ausgebildet ist, läßt sich im Vergleich zu bekannten Filtersystemen eine vorteilhaft große Anström- oder Filtereintrittsfläche erzeugen. Die vergrößerte Anströmfläche gewährleistet unter anderem eine verbesserte Filterwirkung des Filterkörpers beim Durchströmen des schadstoffbelasteten Mediums. Zudem bewirkt die relativ große Anströmfläche auch eine relativ geringe Störanfälligkeit hinsichtlich einer möglichen Verstopfungsgefahr, da, aufgrund der vergrößerten Anströmfläche bei gleichbleibender Einlaufgeschwindigkeit des Mediums in den Auffangbehälter, sich die Anströmgeschwindigkeit im Bereich der Anströmfläche des Filterkörpers verringert. Durch die verringerte Anströmgeschwindigkeit kann ein weitaus größerer Anteil der im Medium befindlichen Schwebeteilchen durch die wirkende Schwerkraft auf den Grund des Auffangbehälters absinken und diese werden somit nicht in den Filterkörper eingetragen. Der Filterkörper kann ein zumindest abschnittsweise ringförmiges Segment sein, welches vorzugsweise mit seiner Längsachse in vertikaler Ausrichtung innerhalb des Auffangbehälters angeordnet ist.

Nach einer vorteilhaften Weiterbildung der Erfindung ist vorgesehen, daß die Wandungen des Filterkörpers konzentrisch zueinander angeordnet sind. Der Filterkörper ist vorzugsweise als Hohlkörper ausgebildet, dessen Innen- und Außenwandung einen gemeinsamen Mittenbereich aufweisen. Durch den gemeinsamen Mittenbereich entsteht über die gesamte als Anströmfläche ausgebildete Außenwandungen ein nahezu gleichmäßiger Eintritt des Mediums in das Filterinnere und somit eine optimale Filterwirkung des Filterkörpers. Es ist zum Beispiel denkbar, einen quaderförmigen Filterkörper mit einer rechteckigen, sich um die Längsachse des Filterkörpers erstreckenden Innenwandung einzusetzen.

Der Filterkörper ist als Hohlzylinder ausgebildet, dessen Innen- und Außenwandung vorzugsweise umlaufend einen gleichmäßigen Abstand zueinander aufweisen. Durch die sich daraus ergebende konstante Wand- oder Packungsdichte ist eine homogene Struktur des Filterkörpers erzeugt und somit im Inneren des gesamten Filterkörpers mit Vorteil ein konstanter Strömungsverlust gegeben. An der gesamten Anströmfläche stellt sich diesbezüglich ein optimales Strömungsverhalten ein.

An Stelle eines als Hohlzylinder ausgebildeten Filterkörpers besteht alternativ die Möglichkeit, daß der Filterkörper radial nach außen verlaufende Filterstege aufweist. Mit Hilfe der Filterstege, die vorzugsweise jeweils in einem rechten Winkel zueinander an der Außenwandung des Filterkörpers angeordnet sind, ist die Anströmfläche des Filterkörpers mit Vorteil weiter vergrößert. Die weiter vergrößerte Anströmfläche des Filterkörpers gewährleistet wiederum eine entsprechend verringerte Verstopfungsgefahr der Anströmfläche. Es ist selbstverständlich auch möglich, eine variierende Anzahl von Stegen an der Außenwandung des Filterkörpers anzuordnen.

Mit Vorteil ist nach einer Weiterbildung der Erfindung vorgesehen, daß mindestens eine der Wandungen radial zur Längsachse des Filterkörpers verlaufende Stichkanäle aufweist. Sowohl die Innenwandung als auch die Außenwandung eines jeweils eingesetzten Filterkörpers kann eine vorbestimmte Anzahl von Stichkanälen aufweisen, mit Hilfe denen insbesondere ein vorteilhafter Ab- oder Zulauf des Mediums aus bzw. in den Filterkörper geschaffen ist. Des weiteren lassen sich mittels der Stichkanäle vorbestimmte Packungsdicken und Strömungsrichtungen innerhalb des Filterkörpers erzeugen, die eine optimierte Verweilzeit des Mediums im Filterkörper bewirken.

Der Filterkörper ist aus Segmenten zusammengesetzt, wodurch eine konstruktiv einfache Ausgestaltung des Filterkörpers gegeben ist. Die segmentartige Ausbildung des Filterkörpers gewährleistet eine vorteilhaft einfache Entnahme der einzelnen Segmente aus dem Auffangbehälter, die dann zu Wartungszwecken gereinigt oder im Bedarfsfall ausgetauscht werden können.

Der Filterkörper ist mit einem Durchbruch versehen, in den ein Ablauf hineinragt, welcher das gefilterte Medium aus dem Auffangbehälter abführt. Der Durchbruch stellt eine konstruktiv einfache Möglichkeit zum Abführen des gereinigten Mediums aus dem als Abströmbereich fungierenden Innenraum des insbesondere als Hohlzylinder ausgebildeten Filterkörpers dar.

Der Durchbruch erstreckt sich insbesondere in radialer Richtung zur Rotationsachse des Filterkörpers, der zum Beispiel ein daran angeschlossenes Rohrstück aufweist. Mittels des Rohrstückes wird das Medium in eine Rigole abgeführt, welche anschließend für eine kontrollierte Versickerung des gereinigten Mediums im Erdreich sorgt. Es ist selbstverständlich auch möglich, sowohl den Durchbruch als auch einen Abschnitt im weiteren Verlauf des in den Durchbruch hineinragenden Rohrstückes mit einem Neigungswinkel zu versehen.

Eine Weiterbildung der Erfindung sieht vor, daß der Filterkörper ein Substratfilter ist. Durch den Einsatz eines Substratfilters kann ein Filterkörper mit bestimmten physikalischen, chemischen oder biologischen Eigenschaften geschaffen werden, welches individuell auf die aus dem Medium auszufällenden bzw. herauszulösenden Schadstoffe ausgebildet werden kann. Somit lassen sich bestimmte über die Verkehrs- bzw. Dachflächen in das Regenwasser eingebrachte Schadstoffe, wie zum Beispiel Metallionen, auf vorteilhafte Weise mit der erfindungsgemäßen Vorrichtung herausfiltern. Des weiteren besteht die Möglichkeit die Packungsdichte des Substratfilters in Abhängigkeit zur erwarteten Schadstoffkonzentration im Regenwasser auszugestalten. Je mehr Filterweg das zu reinigende Medium durch den Substratfilter zurücklegt, desto geringer ist die Restschadstoffkonzentration im Medium. Packungsdicken von mehr als 20 cm haben sich als vorteilhaft erwiesen. Als Grundlage für den Filterkörper kann beispielsweise ein Bindemittel oder Schüttgut mit entsprechenden Filtereigenschaften eingesetzt werden. Selbstverständlich ist auch die Verwendung eines Siebfilters denkbar.

Der Auffangbehälter weist eine das Behältervolumen in vorbestimmte Behälterzonen unterteilende Trennwand auf. Mittels der Trennwand wird der Auffangbehälter entsprechend den nacheinander ablaufenden Prozessen, wie zum Beispiel der Sedimentation und der sich daran anschließenden Filterung, im wesentlichen in eine Sedimentationszone und eine Filterzone unterteilt, wodurch die Wirkungsgrade der einzelnen Prozesse mit Vorteil weiter verbessert werden können. Um beispielsweise den Sedimentationsprozeß von der nachfolgenden Filterung des zu reinigenden Mediums voneinander abzutrennen, kann die Trennwand im Inneren des Hohlgefäßes gegebenenfalls horizontal angeordnet sein.

Mit besonderem Vorteil weist die Trennwand zumindest ein Flächenstück auf, das mit Perforationen für eine medienleitende Verbindung zwischen den vorbestimmten Behälterzonen versehen ist. Die Ausbildung von Perforationen schafft eine konstruktiv einfache Möglichkeit für eine medienleitende Verbindung insbesondere zwischen der Sedimentationszone und der Filterzone des Auffangbehälters. Neben der Aufgabe zur Sicherstellung einer medienleitenden Verbindung haben die Perforationen die Funktion eines Vorfiltersiebes, an dem insbesondere im Medium aufsteigender Grobschwimmschmutz vorgefiltert wird und dieser mit Vorteil nicht in die Filterzone des Auffangbehälters gelangt. Die Perforationen bzw. Durchbrüche in der Trennwand sind vorzugsweise entlang eines kreisringförmigen Flächenstückes im äußeren Bereich der Trennwand angeordnet, so daß das zu filternde Medium gleichmäßig verteilt in einen Einströmbereich der Filterzone vor die Anströmfläche des Filterkörpers gelangen kann.

Um einer Verschmutzung bzw. dem Verstopfen der Perforationen der Trennwand durch aufschwimmende Schmutzpartikel entgegenwirken zu können, weist die Trennwand eine trichterförmige Prallfläche mit einem sich nach oben verengenden Querschnitt auf. Die trichterförmig bzw. konisch verlaufende Prallfläche bewirkt, daß mitgerissene bzw. schwimmfähige Schmutzpartikel, nachdem diese an den Perforationen in der Trennwand abgesondert wurden, entlang der Trennwand abgeführt und in einem vorbestimmten Bereich des Auffangbehälters zusammengeführt bzw. gesammelt werden.

Die Trennwand umfaßt einen an die Prallfläche angrenzenden Rohrabschnitt, der zum Beispiel in den freien Mittenbereich des Filterkörpers hineinragen kann. Mit Hilfe des an der Prallfläche angrenzenden Rohrabschnittes ist im Inneren des Auffangbehälters ein von der Filterzone abgegrenzter Bereich geschaffen, in dem auf vorteilhaft einfache Weise der aus der Sedimentationszone aufsteigende Schwimmschmutz in einer Schwimmschutzzone separat gesammelt werden kann. Der Rohrabschnitt steht vorzugsweise senkrecht in den freien Mittenbereich des Filterkörpers, wobei die Länge des Rohrabschnittes derart gewählt ist, daß der Rohrabschnitt sich in vertikaler Richtung, bis über einen den allgemeinen Füllstand im Auffangbehälter markierenden Wasserstand erstreckt oder hinausragt.

Dem Rohrabschnitt ist zumindest ein Abführstutzen zugeordnet, welcher in das Innere des Rohrabschnittes einführbar ist. Damit an der Oberfläche des Mediums innerhalb des Rohrabschnittes aufschwimmende Schmutzpartikel in vorbestimmten Zeitabständen entfernt werden können, weist der Auffangbehälter oberhalb des Rohrabschnittes einen in seiner Höhe verstellbaren Abführstutzen auf. Im Bedarfsfall kann dieser in das Innere des Rohrabschnittes herabgelassen werden, wobei über entsprechende Hilfsmittel eine Zwangsabführung der in der Schwimmschutzzone befindlichen Schmutzpartikel erfolgen kann. Mit Hilfe des Abführstutzens läßt sich neben dem Schwimmschmutz auch der im Sedimentationsbereich abgelagerte Schlamm oder Grobschmutz auf vorteilhafte Weise entfernen. Zu diesem Zweck kann der Abführstutzen über den senkrecht verlaufenden Rohrabschnitt bis auf den Grund des Auffangbehälters abgelassen werden. Es ist selbstverständlich auch möglich, das Abführen der im Rohrabschnitt aufgestiegenen Schmutzpartikel über eine im Bereich der Schwimmschmutzzone radial am Rohrabschnitt angeschlossene Rohrleitung vorzunehmen. Die Rohrleitung kann dann im Bedarfsfall beispielsweise über ein Stellorgan mit dem Rohrabschnitt medienleitend verbunden bzw. getrennt werden.

An der Umfangsfläche des Auffangbehälters ist im bodenseitigen Endbereich eine Absaugleitung angeordnet. Die Absaugung des sich in der Sedimentationszone auf dem Grund des Auffangbehälters befindlichen Schlammes oder Grobschmutzes erfolgt nun über die seitlich am Auffangbehälter angeordnete Absaugleitung. Damit kann das Absaugen des Grobschmutzes vereinfacht erfolgen und mit Vorteil auf das Einführen einer sich von oben durch den gesamten Auffangbehälter erstreckenden Absaugleitung verzichtet werden und somit eine verbesserte Gestaltungsmöglichkeit des in der Filterzone befindlichen Filterkörpers gegeben ist.

Der Auffangbehälter ist mit einem Zulauf versehen, der unterhalb des Filterkörpers angeordnet ist. Ein derartig angeordneter Zulauf hat den Vorteil, daß der im Auffangbehälter ablaufende Reinigungsprozeß im Aufströmprinzip erfolgen kann. Zu diesem Zweck ist der Zulauf direkt mit der Sedimentationszone im unteren Abschnitt des Auffangbehälters verbunden, in der auf vorteilhaft einfache Weise unter Einwirkung der Schwerkraft das Ausscheiden von Schwebeteilchen aus dem zu reinigenden Medium möglich ist. Das Endstück des Zulaufes kann in horizontaler Ausrichtung innerhalb des Auffangbehälters angeordnet sein, wobei das Medium gleichzeitig etwa tangential zur Behälterwandung des vorzugsweise zylindrisch ausgebildeten Auffangbehälters eingeleitet wird. Dadurch lassen sich neben der Schwerkraft ebenso die innerhalb einer Zentrifuge wirkenden Fliehkräfte für eine verbesserte Ausscheidung erzeugen.

Mit besonderem Vorteil ist nach einer Weiterbildung der Erfindung vorgesehen, daß der Zulauf im Endbereich mit einem Strömungsberuhiger ausgerüstet ist. Das sich insbesondere vertikal nach unten erstreckende Endstück des Zulaufs ist mit einem Strömungsberuhiger versehen, der sowohl die Strömungsrichtung des aus dem Endstück austretenden Mediums als auch dessen Strömungsgeschwindigkeit auf vorteilhafte Weise verändert bzw. reduziert. Durch die unmittelbare Verringerung der Strömungsgeschwindigkeit werden die im Medium befindlichen Grobschmutzpartikel ausgesondert und setzen sich aufgrund der günstig wirkenden Schwerkraft am Grund des Auffangbehälters ab.

Der Auffangbehälter weist einen Notüberlauf auf, der insbesondere bei einer übermäßigen Menge des in den Auffangbehälter einlaufendem Mediums einen kontrollierten Not-Ablauf ermöglicht, ohne daß im Auffangbehälter befindliche Bauteile übermäßig belastet oder gegebenenfalls beschädigt werden. Der Notüberlauf ist insbesondere über eine separat am Auffangbehälter angeschlossene Rohrleitung gewährleistet, mittels dieser das noch nicht gereinigte Regenwasser anstatt in die Rigole direkt in den Bereich oberhalb des Geländes abgeleitet werden kann.

Ein Ausführungsbeispiel der Erfindung, aus dem sich weitere erfinderische Merkmale ergeben, ist in der Zeichnung dargestellt. Es zeigen:
- Fig. 1:: eine Ansicht einer erfindungsgemäßen Vorrichtung zum Reinigen flüssiger Medien;
- Fig. 2:: eine schematische Draufsicht eines Ausführungsbeispiels eines Filterkörpers;
- Fig. 3:: eine Draufsicht eines zweiten Ausführungsbeispiels des Filterköpers; und
- Fig. 4:: eine schematische Draufsicht eines weiteren Ausführungsbeispiels des Filterkörpers

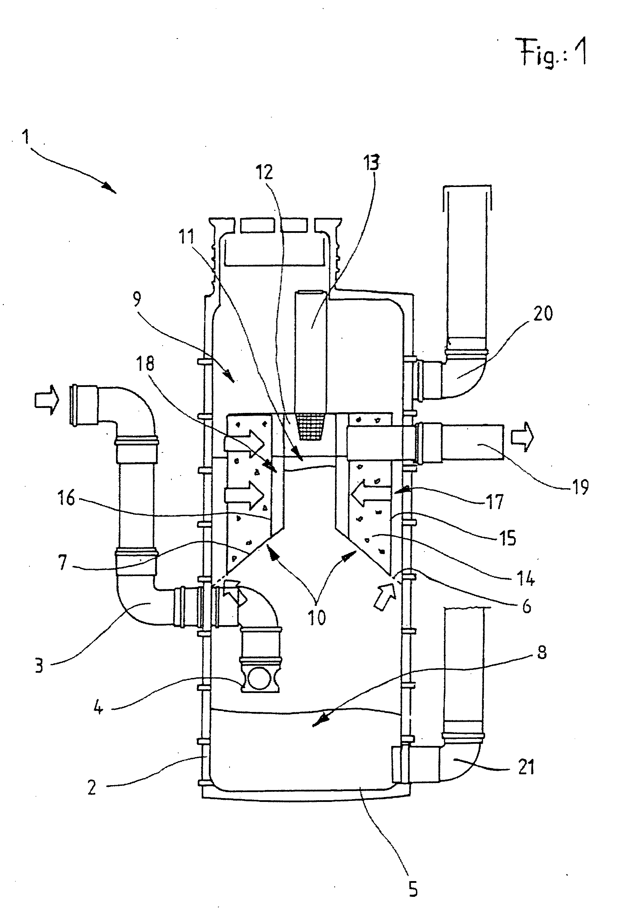

Fig. 1 zeigt eine Vorrichtung 1 zum Reinigen wenigstens eines flüssigen Mediums, wobei die Vorrichtung 1 im Schnitt dargestellt ist, um insbesondere den Aufbau und deren Funktionsweise zu verdeutlichen. Die Vorrichtung 1 weist einen als Hohlgefäß ausgebildeten Auffangbehälter 2 auf, dem über einen Zulauf 3 das aufgefangene und zu reinigende Medium zugeführt wird. Am Ende des Zulaufes 3 ist ein Zulauf- bzw. Strömungsberuhiger 4 angeordnet, der sowohl die Strömungsrichtung als auch die Austrittsgeschwindigkeit des einlaufenden Mediums aus dem Zulauf 3 umlenkt bzw. verringert. Das hat zur Folge, daß zumindest ein Teil der im Medium vorhandenen Schwebeteilchen durch die wirkende Schwerkraft auf den Behälterboden 5 des Auffangbehälters 2 absinkt. Durch die kontinuierliche Zufuhr des zu reinigenden Mediums steigt der Flüssigkeitsstand im Auffangbehälter 2, wobei das Medium auf eine mit Perforationen 6 versehene Trennwand 7 trifft. Die Trennwand 7 hat die Funktion den Auffangbehälter 2 in eine Sedimentationszone 8 und eine Filterzone 9 zu unterteilen. Dabei stellen in vorbestimmte Flächenstücke der Trennwand 7 eingebrachte Perforationen 6 eine notwendige medienleitende Verbindung zwischen den Zonen 8 und 9 sicher. Die Perforationen 6 haben gleichzeitig die Funktion eines Vorfiltersiebes für die Filterzone 9, wobei die Perforationen 6 in Verbindung mit einer konisch verlaufenden Prallfläche 10 der Trennwand 7 die im zu reinigenden Medium verbliebenen schwimmfähigen Schmutzpartikel separieren und einer Schwimmschmutzzone 11 zuführen. Zu diesem Zweck ist an der Prallfläche 10 der Trennwand 7 ein vertikal ausgerichteter Rohrabschnitt 12 angeordnet, in dessen oberen Abschnitt sich die Schwimmschutzzone 11 ausbildet. Dem Rohrabschnitt 12 ist ein Abführstutzen 13 zugeordnet, der in den Rohrabschnitt 12 einführbar ist, um insbesondere die an der Oberfläche des Mediums in der Schwimmschutzzone 11 befindlichen Schmutzpartikel absaugen zu können. Der Rohrabschnitt 12 ragt insbesondere in den freien Mittenbereich eines Filterkörpers 14, der in der Filterzone 9 des Auffangbehälters 2 angeordnet ist. Der Filterkörper 14 weist eine Außenwandung 15 und eine Innenwandung 16 auf, die umlaufend einen gleichmäßigen Abstand zueinander aufweisen können. Die Außenwandung 15 des Filterkörpers 14 ist dabei als Anströmfläche ausgebildet, wobei die Außenwandung 15 von einem seine Anströmfläche nahezu vollständig umschließenden Anströmbereich 17 eingefaßt ist. Das aus der Sedimentationszone 8 in den Anströmbereich 17 der Filterzone 9 eingeströmte flüssige Medium tritt über die Anströmfläche 15 in den beispielsweise als Substratfilter ausgebildeten Filterkörper 14 ein, gibt die im Medium gelösten Schadstoffe an den Filterkörper 14 ab und tritt anschließend an der Innenwandung 16 in einen Abströmbereich 18 aus. Das gereinigte Medium wird nun über einen mit dem Abströmbereich 18 verbundenen Ablauf 19 aus dem Auffangbehälter 2 in eine beispielsweise daran angeschlossene Rigole abgeführt. Der Filterkörper 14 sowie der Auffangbehälter 2 weisen zu diesem Zweck jeweils einen etwa radial zu deren Rotationsachse verlaufenden Durchbruch auf, über den der Ablauf 19 in das Innere, insbesondere bis in den Abströmbereich 18 des Auffangbehälters 2 hineinragt. Der Auffangbehälter 2 ist zusätzlich mit einem Notüberlauf 20 ausgerüstet, mit Hilfe dem ein unzulässiger Füllstand im Auffangbehälter 2 bei einer übermäßigen Zufuhr des zu reinigenden Mediums vermieden werden soll. Zusätzlich weist der Auffangbehälter 2 an seinem Umfang im Bereich des Behälterbodens 5 eine Absaugleitung 21 für den in der Sedimentationszone verbliebenen Grobschmutz auf.

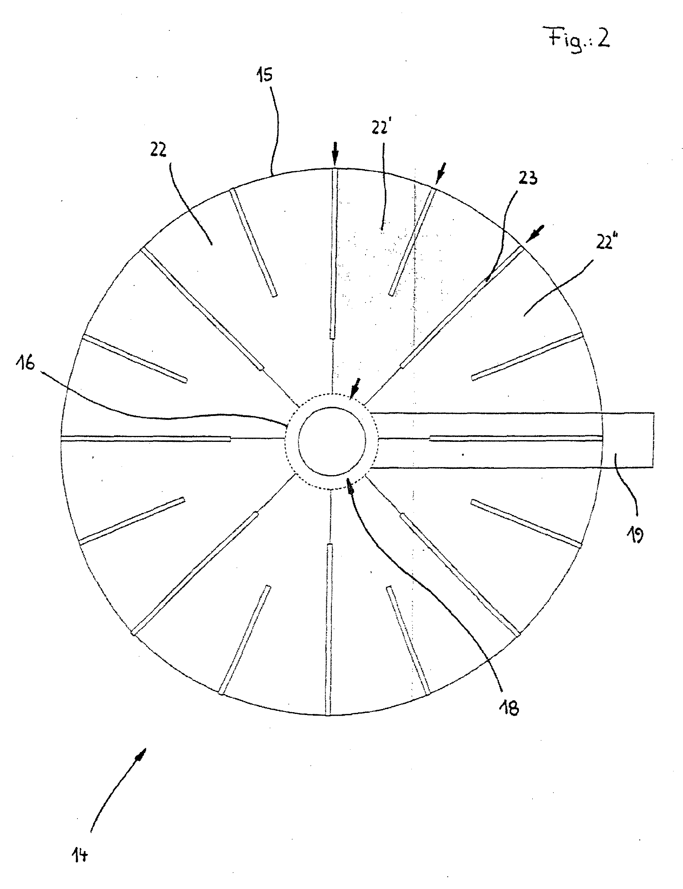

Die Figuren 2 bis 4 zeigen verschiedene Ausführungsformen von Filterkörpern 14, 14', 14", die in der Filterzone 9 des Auffangbehälters 2 angeordnet sein können.

Fig. 2 zeigt einen hohlzylinderförmigen Filterkörper 14, welcher aus einer Vielzahl von Segmenten 22, 22', 22" zusammengesetzt ist. Der Filterkörper 14 weist an seiner Außenwandung 15 radial zu seiner Längsachse verlaufende Stichkanäle 23 auf, die insbesondere die Anströmfläche des Filterkörpers 14 vergrößern und den Zulauf des zu reinigenden Mediums in den Filterkörper erleichtern. Nach dem Austritt des gereinigten Mediums aus dem Filterkörper 14 wird dieses über den Ablauf 19 aus dem Abströmbereich 18 abgeführt.

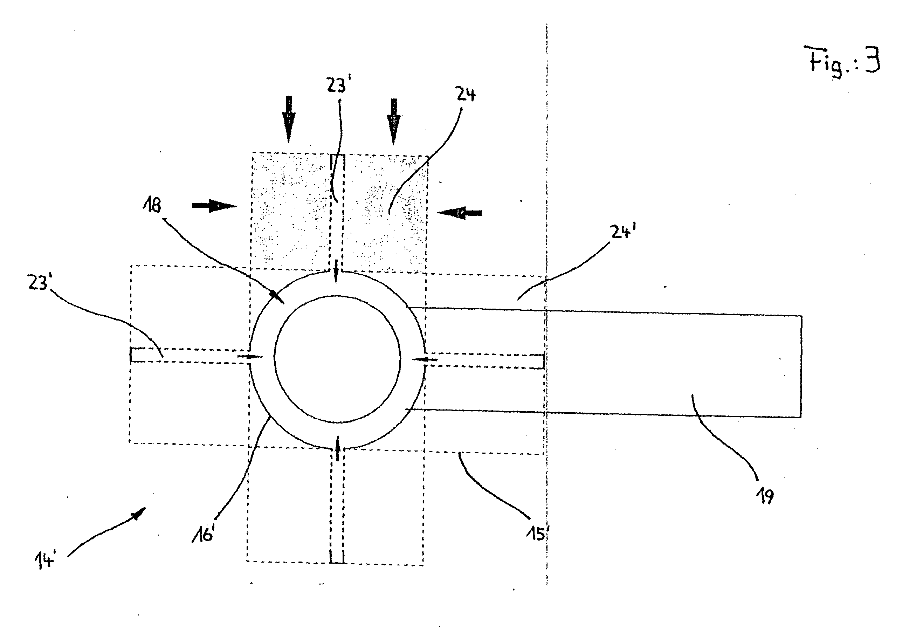

In Fig. 3 ist ein Filterkörper 14' dargestellt, an dessen Außenwandung 15' rechteckige Filterstege 24, 24' ausgebildet sind. Um auch hier eine optimale Filterwirkung zu erreichen, weist in diesem Fall die Innenwandung 16' entsprechende Stichkanäle 23' auf, die speziell den Abströmvorgang des gereinigten Mediums aus dem Filterkörper 14' steuern.

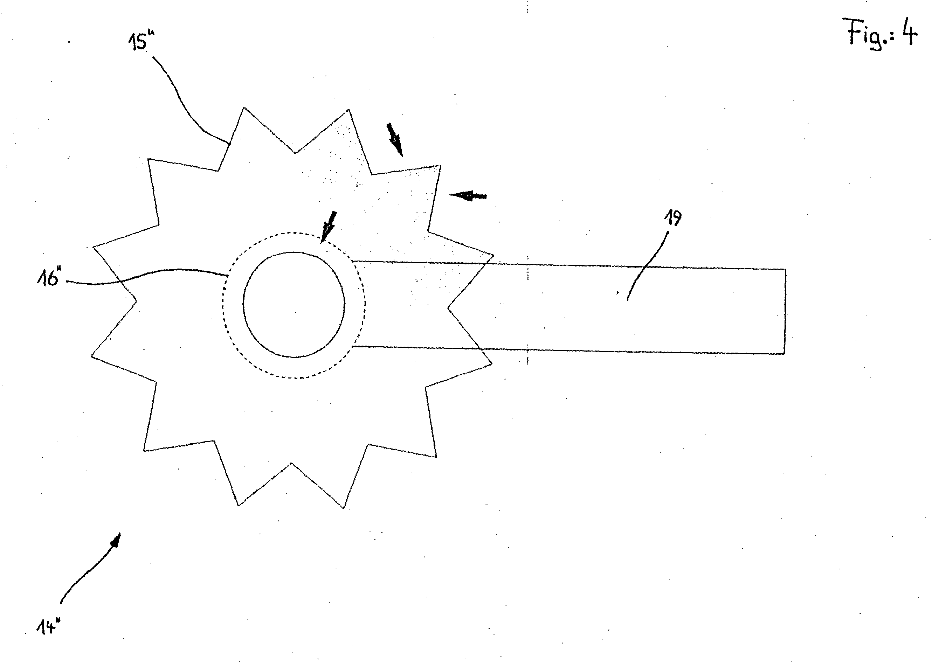

Fig. 4 zeigt ein weiteres Ausführungsbeispiel eines Filterkörpers 14", dessen sternförmige Außenwandung 15" mit Hilfe der wiederum auf vorteilhafte Weise die Anströmfläche des Filterkörpers 14" vergrößert ist.

## Patentansprüche

1. Vorrichtung zum Reinigen wenigstens eines flüssigen Mediums, insbesondere Abwasser, mit zumindest einem das Medium zwischenspeichernden Auffangbehälter, wobei der Auffangbehälter zumindest ein vom Medium durchströmten Filterkörper für die im Medium befindlichen Verunreinigungen aufweist,
**dadurch gekennzeichnet,**
**daß** der Filterkörper (14, 14', 14") wenigstens eine als Anströmfläche ausgebildete Außenwandung (15, 15', 15") und mindestens eine als Abströmfläche ausgebildete Innenwandung (16, 16', 16") aufweist, wobei die Innenwandung (16, 16', 16") von der Außenwandung (15, 15', 15") zumindest abschnittsweise ummantelt ist.

2. Vorrichtung nach Anspruch 1, **dadurch gekennzeichnet, daß** die Wandungen (15, 15', 15", 16, 16', 16") konzentrisch zueinander angeordnet sind.

3. Vorrichtung nach einem der Ansprüche 1 und 2, **dadurch gekennzeichnet, daß** der Filterkörper (14) als Hohlzylinder ausgebildet ist.

4. Vorrichtung nach einem der Ansprüche 1 und 2, **dadurch gekennzeichnet, daß** der Filterkörper (14') radial nach außen verlaufende Filterstege (24, 24') aufweist.

5. Vorrichtung nach einen der Ansprüche 1 bis 4, **dadurch gekennzeichnet, daß** mindestens eine der Wandungen (15, 15', 16, 16') radial zur Längsachse des Filterkörpers (14, 14') verlaufende Stichkanäle (23, 23') aufweist.

6. Vorrichtung nach einem der Ansprüche 1 bis 5, **dadurch gekennzeichnet, daß** der Filterkörper (14, 14') aus Segmenten (22, 22', 22") zusammengesetzt ist.

7. Vorrichtung nach einem der Ansprüche 1 bis 6, **dadurch gekennzeichnet, daß** der Filterkörper (14, 14', 14") mit mindestens einem die Wandungen (15, 15', 15", 16, 16', 16") durchdringenden Durchbruch für einen Ablauf (19) versehen ist.

8. Vorrichtung nach Anspruch 7, **dadurch gekennzeichnet, daß** der Durchbruch sich in radialer Richtung zur Längsachse des Filterkörpers (14, 14', 14") erstreckt.

9. Vorrichtung nach einem der Ansprüche 1 bis 8, **dadurch gekennzeichnet, daß** der Filterkörper (14, 14', 14") ein Substratfilter ist.

10. Vorrichtung nach einem der Ansprüche 1 bis 9, **dadurch gekennzeichnet, daß** der Auffangbehälter (2) eine das Behältervolumen in vorbestimmte Behälterzonen (8, 9) unterteilende Trennwand (7) aufweist.

11. Vorrichtung nach Anspruch 10, **dadurch gekennzeichnet, daß** die Trennwand (7) zumindest ein Flächenstück aufweist, das mit Perforationen (6) für eine medienleitende Verbindung der vorbestimmten Behälterzonen (8, 9) miteinander versehen ist.

12. Vorrichtung nach einem der Ansprüche 10 und 11, **dadurch gekennzeichnet, daß** die Trennwand (7) eine trichterförmige Prallfläche (10) mit einem sich nach oben verengenden Querschnitt aufweist.

13. Vorrichtung nach einem der Ansprüche 10 bis 12, **dadurch gekennzeichnet, daß** die Trennwand (7) einen an die Prallfläche (10) angrenzenden Rohrabschnitt (12) umfaßt, der in den freien Mittenbereich des Filterkörpers (14, 14', 14") hineinragt.

14. Vorrichtung nach Anspruch 13, **dadurch gekennzeichnet, daß** dem Rohrabschnitt (12) ein Abführstutzen (13) zugeordnet ist, welcher in das Innere des Rohrabschnittes (12) einführbar ist.

15. Vorrichtung nach einem der Ansprüche 1 bis 14, **dadurch gekennzeichnet, daß** an der Umfangsfläche des Auffangbehälters (2) im bodenseitigen Endbereich eine Absaugleitung (21) angeordnet ist.

16. Vorrichtung nach einem der Ansprüche 1 bis 15, **dadurch gekennzeichnet, daß** der Auffangbehälter (2) mit einem Zulauf (3) versehen ist, der unterhalb des Filterkörpers (14, 14', 14") angeordnet ist.

17. Vorrichtung nach Anspruch 16, **dadurch gekennzeichnet, daß** der Zulauf (3) mit einem Strömungsberuhiger (4) ausgerüstet ist.

18. Vorrichtung nach einem der Ansprüche 1 bis 17, **dadurch gekennzeichnet, daß** der Auffangbehälter (2) einen Notüberlauf (20) aufweist.
